# EUROPEAN PATENT APPLICATION

(11) **EP 1 428 838 A1**
(43) Date of publication of application: **16.06.2004**
(21) Application number: 02027694.5
(22) Date of filing: 13.12.2002
(51) Int. Cl.: C08F 4/00

(54) **In situ-polymerization of monoethylenically unsaturated monomers with secondary amines**

(71) Applicant: Bayer MaterialScience AG, 51368 Leverkusen (DE)
(72) Inventor: Dètrembleur, Christophe, Dr., 51061 Köln (DE); Gross, Thomas, Dr., 42489 Wülfrath (DE); Meyer, Rolf-Volker, Dr., 53804 Much (DE)

(57) **Abstract**

The present invention relates to a new process for the preparation of well-defined homopolymers, random and block copolymers using a mixture of a hindered secondary amine and an oxidizing agent, without any additional free-radical initiator.

## Description

The present invention relates to a new process for the preparation of well-defined homopolymers, random and block copolymers using a mixture of a hindered secondary amine and an oxidizing agent, without any additional free-radical initiator.

Today, the demand for homopolymers, random copolymers and block copolymers of a specific molecular weight, narrow molecular weight distribution and/or well-defined end groups has continuously increased in a number of industries. The controlled structure of these macromolecules provides them with novel properties and allows a tailor-made property profile to be obtained. Many new technologies require controlled polymer structures such as for instance in the fields of electronics, computer science, communications, genetic engineering, biotechnology and materials science.

Many polymers are commercially produced by free radical polymerization due to the far less demanding conditions, i.e. the possible use of water as solvent, the far broader temperature range which can be employed as well as the broader range of monomers which can be polymerized. Moreover, radical copolymerization offers many opportunities for modifying the polymer properties. The neutrality of the radical species is however responsible for irreversible transfer and termination reactions, which are responsible for the poor control of the macromolecular structures including degree of polymerization, polymolecularity, end functionality and chain architecture.

On the other hand, controlled radical polymerization (CRP) is a powerful tool for controlling finely the molecular characteristics of the chains (Mₙ, M_{w}/Mₙ) and their macromolecular architecture. For example, well-defined block copolymers can be synthesized by the sequential addition of comonomers and polymers with terminal functional groups can be made available by the judicious choice of either the initiator (α-chain-end) or the deactivating agent (ω-chain-end).

Of all the CRP systems presently under investigation, nitroxyl-mediated polymerization is one of the most efficient. This process is based on the reversible capture of the propagating radicals by nitroxyl radicals to form dormant chains. This approach is for example disclosed in US-A 4,581,429. Nevertheless, this NMP process is handicapped by slow polymerization kinetics, a limited range of suitable monomers and the high cost of the required nitroxyl radicals.

Quite recently, some of these NMP problems have been solved. Both the acceleration of the rate of polymerization and the broadening of the range of monomers to be polymerized have been reported by Hawker et al. (*J. Am*. *Chem*. *Soc*. 1999, 121, 3904) and for example in WO-A 96/24620. Reduced polymerization temperatures have been reported by Miura et al. (*Macromolecules* 2001, 34, 447) by using nitroxyl radicals with spiro structures.

Although these improved NMP processes represent attractive methods for obtaining new polymer structures, they still require the use of not readily available and complicated nitroxyl radicals and/or alkoxyamines, which considerably increase the total cost of a technical process. Consequently, there is still a need for more simple NMP processes able for polymerizing a broad range of monomers.

WO-A 99/03894 and US-A 6,262,206 disclose the use of nitrones and nitroso compounds to control the radical polymerization of vinyl monomers. When these compounds were added to the radical polymerization of vinyl monomers, nitroxyl radicals were formed in-situ by reaction of the initiating radicals or propagating chains with the nitrones or nitroso compounds. The polymerization was thus controlled by an NMP mechanism.

The use of nitrones and nitroso compounds for promoting the free radical polymerization of vinyl monomers controlled by an in situ NMP process has also been reported for example by D. F. Grishin et al., *Polymer Science, Ser. A,* 1999, 41(4), 401; D. F. Grishin et al, *Polymer Science, Ser. B.* 2000 42(7-8), 189; D. F. Grishin et al., *Russian Journal of Applied Chemistry* 2001, 74(3), 494; D.F. Grishin et al. *Mendeleev Commun.* 1999, 250; D. F. Grishin et al., *Russian Journal of Applied Chemistry* 2001, 74(9), 1594.

More recently, the controlled radical polymerization of styrene mediated by nitroso-tert-octane was reported by J.M. Catala et al., *Macromolecules* 2001, 34, 8654.

These in-situ processes using nitroso compounds or nitrones allow the avoidance of the tedious synthesis of the nitroxyl radicals. Nevertheless, these methods require the use of preformed reagents which may be toxic (especially in case of nitroso compounds), and most of them are still not readily available and have to be synthesized by special methods.

US-A 6,320,007 and JP-A 08208714 describe the manufacture of thermoplastic polymers having narrow molecular weight distribution using an in situ NMP process, in which the stable nitroxyl radical is formed from a precursor substance in a reactor. The polymerization process occurs in two steps: firstly the nitroxyl radicals are formed from the precursor (secondary amine) and secondly, the nitroxyl radical is added to the polymerization of the vinyl monomer in order to form a thermoplastic polymer characterized by a narrow molecular weight distribution. In the two examples, 2,2,6,6-tetramethylpiperidine (TMP) is used as precursor for the nitroxyl radical, when combined with m-chloroperbenzoic acid or a mixture of hydrogen peroxide and sodium tungstate as the oxidizing agent. Drawbacks of these processes are the long reaction times to form the nitroxyl radical prior to polymerization and the use of free-radical initiators (such as benzoyl peroxide for instance) to initiate the polymerization, which makes a preliminary reaction between the monomer, the initiator and the nitroxyl radical necessary before polymerization. This is associated with an increase in the cost of the process.

The object of the present invention was to provide a new synthetic pathway for the synthesis of homo- and copolymers of controlled molecular weight and controlled molecular structure. Such a process should be a simple and inexpensive method of controlling the free-radical polymerization of vinyl monomers that overcomes the drawbacks encountered in the prior art.

Surprisingly, it has now been found that it is possible to provide a process for the preparation of well-defined (co)polymers of controlled molecular weight, narrow polydispersity, high monomer conversion and controlled architecture, at relatively low temperatures and with short reaction times, if the polymerization of vinyl monomers is carried out in the presence of a secondary amine and an oxidizing agent. The addition of a free radical initiator before polymerization is unnecessary. Moreover, no preliminary reaction between the secondary amine and the oxidizing agent is required prior to the addition of the monomer(s), and the polymerization medium can be quite rapidly heated at the polymerization temperature without any preliminary reaction of the products.

The object of the present invention is a process for producing of oligomers, cooligomers, polymers or block or random copolymers comprising
(I) mixing compounds consisting essentially of
   a) at least one monoethylenically unsaturated monomer of the general formula (M),

      HR¹C = CR²R³ (M),

      wherein
      - R¹, R², R³: are independently selected from the group consisting of hydrogen, C₁-C₂₀-alkyl, C₁-C₂₀-cycloalkyl C₆-C₂₄- aryl, halogen, cyano, C₁-C₂₀-alkylester C₁-C₂₀-cyclo-alkylester, C₁-C₂₀-alkylamide, C₁-C₂₀-cycloalkylamide C₆-C₂₄-arylester or C₆-C₂₄-arylamide,
   b) at least one oxidizing agent (A) and
   c) at least one secondary amine of the general formula (I), 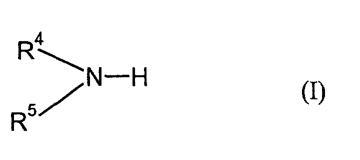
   wherein
   - R⁴ and R⁵: are independently selected from the group consisting of C₁-C₁₈-alkyl, C₂-C₁₈-alkenyl, C₂-C₁₈-alkynyl, C₃-C₁₂-cycloalkyl or C₃-C₁₂-heterocycloalkyl, C₆-C₂₄-aryl, which are unsubstituted or substituted by NO₂, halogen, amino, hydroxy, cyano, carboxy, ester, ketone, C₁-C₄-alkoxy, C₁-C₄-alkylthio, C₁-C₄-alkylamino;
   - R⁴ and R⁵: optionally form, together with the intermediate nitrogen atom, a C₃-C₁₂-cycloalkyl residue, a C₄-C₁₂-alkanol residue or a C₂-C₁₃-heterocycloalkyl residue containing oxygen, sulfur or nitrogen atoms;
   - R⁴ and R⁵: together form a residue of a polycyclic ring system or a polycyclic heterocycloaliphatic ring system containing oxygen, sulfur or nitrogen atoms;
   wherein the carbon atom of the R⁴ and R⁵ radicals directly adjacent to the alkoxyamine nitrogen atom is in each case substituted by 3 further organic substituents;
   wherein optionally at least one of the residues R⁴ and R⁵ contain a functional group Y which is capable of further reacting or crosslinking with functional groups known in the coatings field and
(II) then heating the mixture at a temperature in the range from about 0°C to 220°C.

Typical monoethylenically unsaturated monomers (M) which are suitable for the present invention are the alkyl esters of acrylic or methacrylic acids, such as methyl acrylate, ethyl acrylate, butyl acrylate, methyl methacrylate, ethyl methacrylate, butyl methacrylate and isobutyl methacrylate; the hydroxyalkyl esters of acrylic or methacrylic acids, such as hydroxyethyl acrylate, hydroxypropyl acrylate, hydroxyethyl methacrylate and hydroxypropyl methacrylate; acrylamide, methacrylamide, N-tertiary butylacrylamide, N-methylacrylamide, N,N-dimethylacrylamide; acrylonitrile, methacrylonitrile, allyl alcohol, dimethylaminoethyl acrylate, dimethylaminoethyl methacrylate, phosphoethyl methacrylate, N-vinylpyrrolidone, N-vinylformamide, N-vinylimidazole, vinyl acetate, conjugated dienes such as butadiene or isoprene, styrene, styrenesulfonic acid salts, vinylsulfonic acid salts and 2-acrylamido-2-methylpropane-sulfonic acid salts and acryloyl. Suitable monomers (M) can be water-soluble or water-insoluble.

Examples of comonomers suitable for use in the present invention are C₃-C₆-ethylenically unsaturated monocarboxylic acids as well as the alkali metal salts and ammonium salts thereof. The C₃-C₆-ethylenically unsaturated monocarboxylic acids include acrylic acid, methacrylic acid, crotonic acid, vinylacetic acid and acryloxypropionic acid. Acrylic acid and methacrylic acid are the preferred monoethylenically unsaturated monocarboxylic acid monomers.

Examples of C₈-C₁₆-ethylenically unsaturated phenolic compounds which may also be used as comonomers are 4-hydroxystyrene, 4-hydroxy, α-methyl styrene, 2,6-ditert-butyl and 4-vinyl phenol.

Another class of carboxylic acid monomers suitable for use as comonomers in this invention are C₄-C₆-ethylenically unsaturated dicarboxylic acids and the alkali metal and ammonium salts thereof as well as the anhydrides of cis-dicarboxylic acids. Suitable examples include maleic acid, maleic anhydride, itaconic acid, mesaconic acid, fumaric acid and citraconic acid. Maleic anhydride and itaconic acid are the preferred monoethylenically usaturated dicarboxylic acid monomers.

The acid monomers suitable for use in the present invention may be in the form of their acids or in the form of the alkali metal salts or ammonium salts of the acid.

Preferred monomers are selected from the group consisting of (meth)acrylic acid esters of C₁-C₂₀-alcohols, acrylonitrile, cyanoacrylic acid esters of C₁-C₂₀-alcohols, maleic acid diesters of C₁-C₆-alcohols, maleic anhydride, vinylpyridines, vinyl-(alkylpyrroles), vinyloxazoles, vinyloxazolines, vinylthiazoles, vinylimidazoles, vinylpyrimidines, vinyl ketones, conjugated dienes, acrolein, styrene or styrene derivatives which contain a C₁-C₆-alkyl radical or halogen in the α-position and contain up to 3 additional substituents on the aromatic ring.

Particularly preferred monomers are styrene, substituted styrene, vinyl acetate, acrylonitrile, methyl acrylate, butyl acrylate, 2-ethylhexyl acrylate and maleic anhydride.

Suitable oxidizing agents (A) can be all oxidizing agents known from the prior art for the oxidation of secondary amines into nitroxyl radicals. Preferred oxidizing agents are peracids such as peracetic acid, perpropionic acid, m-chloroperbenzoic acid, di-methyldioxirane, perbenzoic acid, or peroxides such as potassium peroxymonosulfate (2 KHSO₅•KHSO₄•K₂SO₄, Oxone®, DuPont Specialty Chemistry, USA), hydrogen peroxide, hydrogen peroxide/sodium tungstate, hydrogen peroxides/titanium containing catalysts, dibenzoyl peroxide, such as for example titanium dioxide and titanium silicalites (EP-A 0 488 403, page 5), phosphotungstic acid and oxidizing gases such as molecular oxygen or ozone.

Metal oxides such as silver oxide, lead (IV) oxide and sodium tungstate can also be used, optionally in combination with another oxidizing agent. A mixture of various oxidizing agents can also be used.

Particularly preferred are peracetic acid, perpropionic acid, hydrogen peroxide, hydrogen peroxide/titanium containing catalysts, potassium peroxymonosulfate (2 KHSO₅•KHSO₄•K₂SO₄), dibenzoyl peroxide, silver oxide and lead (IV) oxide.

Useful sterically hindered secondary amines of the general formula (I), are for example, those of the following formulae (II) to (VIII): 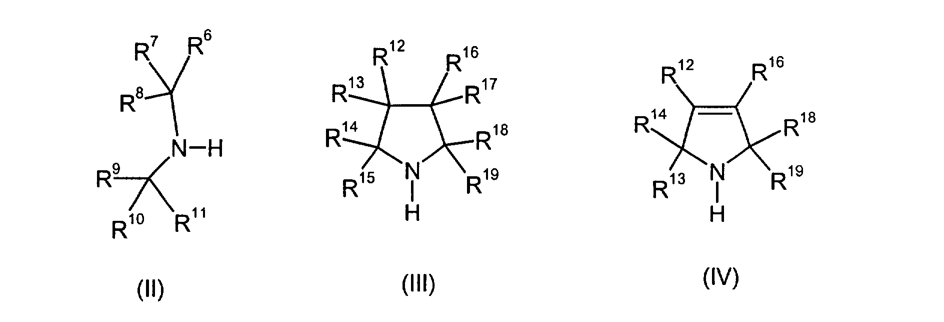 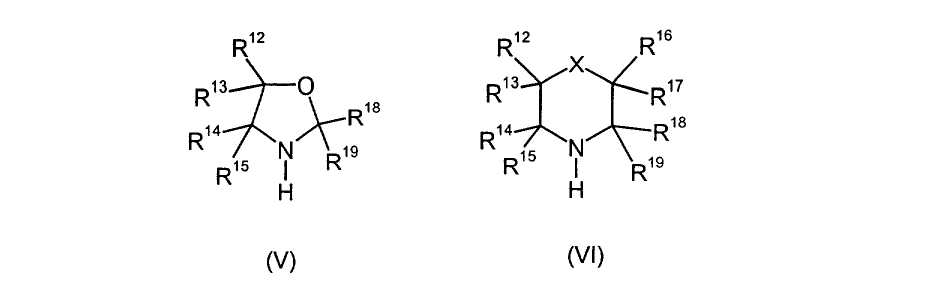 wherein
- R⁶, R⁷, R⁸,R⁹,R¹⁰,R¹¹,R¹²,R¹³, R¹⁴,R¹⁵,R¹⁶, R¹⁷, R¹⁸, R¹⁹: are independently selected from the group consisting of hydrogen, halogen or cyano-, amide-, ether-, ester-, thioether-, ketone-, amide-, carbomyl-, amidine-or dialkylphosphonyl-containing groups;
- R⁶ to R¹⁹: are independently selected form the group consisting of C₁-C₁₈-alkyl, C₂-C₁₈-alkenyl, C₂-C₁₈-alkynyl, C₃-C₁₂-cycloalkyl or C₃-C₁₂-heterocycloalkyl, C₆-C₂₄-aryl, which are unsubstituted or substituted by NO₂, halogen, amino, hydroxy, cyano, carboxy, ester, C₁-C₄-alkoxy, C₁-C₄-alkylthio, C₁-C₄-alkylamino;
- R⁶ to R¹⁹: can form, together with the intermediate carbon atom, a C₃-C₁₂-cycloalkyl residue, a C₄-C₁₂-alkanol residue or a C₂-C₁₃-heterocycloalkyl residue containing oxygen, sulfur or nitrogen atoms;
- R⁶ to R¹⁹: together form a residue of a polycyclic ring system or a polycyclic heterocycloaliphatic ring system containing oxygen, sulfur or nitrogen atoms;
wherein optionally at least one of the residues R⁶ to R¹⁹ contains a functional group Y which is capable of reacting further or of cross-linking with functional groups known in the coatings field and
- X: represents a methylene, ketone, ester group or oxygen atom, or a hydrocarbon residue, which can be substituted by a cyano, ester, hydroxy, nitro, ether or imido group.

Other useful secondary amines are, for example, those of the following formulae (VII) and (VIII): 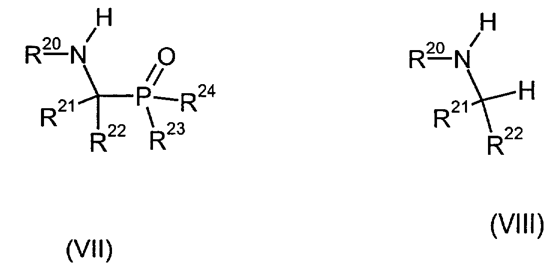 wherein
- R²⁰: is selected from the group consisting of C₁-C₁₈-alkyl, C₂-C₁₈-alkenyl, C₂-C₁₈-alkynyl, C₃-C₁₂-cycloalkyl or C₃-C₁₂-heterocycloalkyl, C₆-C₂₄-aryl, which are unsubstituted or substituted by NO₂, halogen, amino, hydroxy, cyano, carboxy, C₁-C₄-alkoxy, C₁-C₄-alkylthio and C₁-C₄-alkylamino;
- R²⁰: optionally contains a functional group Y which is capable of reacting further or of crosslinking with the functional groups known from the coatings field;
- R²¹ and R²²: are independently selected from the group consisting of hydrogen, halogen and cyano-, amide-, ether-, ester-, thioether-, ketone-, amide-, carbomyl-, amidine- or dialkylphosphonyl-containing groups;
- R²¹ and R²²: are independently selected from the group consisting of C₁-C₁₈-alkyl, C₂-C₁₈-alkenyl, C₂-C₁₈-alkynyl, C₃-C₁₂-cycloalkyl or C₃-C₁₂-heterocycloalkyl, C₆-C₂₄-aryl, which are unsubstituted or substituted by NO₂, halogen, amino, hydroxy, cyano, carboxy, C₁-C₄-alkoxy, C₁-C₄-alkylthio and C₁-C₄-alkylamino;
wherein R²¹ and R²² optionally form, together with the intermediate carbon atom, a C₃-C₁₂-cycloalkyl residue, a C₄-C₁₂-alkanol residue or a C₂-C₁₃-heterocycloalkyl residue containing oxygen, sulfur or nitrogen atoms;
- R²¹ and R²²: together form a residue of a polycyclic ring system or a polycyclic heterocycloaliphatic ring system containing oxygen, sulfur or nitrogen atoms;
wherein R²³ and R²⁴ optionally form, together with the intermediate phosphorus atom a C₃-C₁₂-cycloalkyl residue, a C₄-C₁₂-alkanol residue or a C₂-C₁₃-heterocycloalkyl residue containing oxygen, sulfur or nitrogen atoms;
wherein optionally at least one of the residues R²⁰ to R²⁴ contains a functional group Y which is capable of further reacting or of crosslinking with functional groups known from the coatings field;
- R²³, R²⁴: are independently selected from the group consisting of C₁-C₁₈-alkyl, C₂-C₁₈-alkenyl, C₂-C₁₈-alkynyl, C₃-C₁₂-cycloalkyl or C₃-C₁₂-heterocycloalkyl or C₆-C₂₄-aryl, which are unsubstituted or substituted by NO₂, halogen, amino, hydroxy, cyano, carboxy, C₁-C₄-alkoxy, C₁-C₄-alkylthio or C₁-C₄-alkylamino;
wherein R²³ and R²⁴ optionally form, together with the intermediate phosphorus atom, a C₃-C₁₂-cycloalkyl residue, a C₄-C₁₂-alkanol residue or a C₂-C₁₃-heterocycloalkyl residue containing oxygen, sulfur or nitrogen atoms;
wherein at least one of the residues R²³ to R²⁴ optionally contains a functional group Y which is capable of further reacting or of crosslinking with functional groups known from the coatings field.

Preferred secondary amines of the general formula (I) are tert-butyl amine; 2,2,6,6-tetramethylpiperidine; 4-hydroxy-2,2,6,6-tetramethylpiperidine; 2,2,6,6-tetramethyl-4-piperidinone; 2,2,6,6-tetramethyl-4-piperidinyl acetate; 2,2,6,6-tetramethyl-4-piperidinyl stearate; 2,2,6,6-tetramethyl-4-piperidinyl benzoate; 2,6-dimethyl-2,6-diethylpiperidine; diethyl 1-(tert-butylamino)-2,2-dimethylpropylphosphonate; di-propyl 1-(tert-butylamino)-2,2-dimethylpropylphosphonate; dibutyl 1-(tert-butylamino)-2,2-dimethylpropylphosphonate; N-(tert-butyl)-1-(diethylphosphoryl)-2,2-di-methyl-1-propylamine; N-(tert-butyl)-1-(dipropylphosphoryl)-2,2-dimethyl-1-propylamine; N-(tert-butyl)-2-methyl-1-phenyl-1-propylamine; 2,2,4,6,6-pentamethyl-1,2,5,6-tetrahydropyrimidine; N-[(3E)-2,2-diphenyl-1,2-dihydro-3H-indol-3-yl-idene]-N-phenylamine; 2,6-diethyl-2,3,6-trimethyl-4-piperidinone; 2,6-diethyl-2,3,6-trimethyl-4-piperidinol; 14-oxa-7-azadispiro[5.1.5.2]pentadecane; 2,2,4,4-tetramethyl-1,3-oxazolidine; 2,2,5,5-tetramethyl-1-pyrrolidine; 3-carboxy-2,2,5,5-tetramethyl-1-pyrrolidine; 2,5-diphenyl-2,5-dimethylpyrrolidine; 3-carboxy-2,5-diphenyl-2,5-di-methylpyrrolidine; 1,1,3,3-tetraethylisoindoline; 1,1,3,3-tetramethylisoindoline; 1,1,3,3-tetrapropylisoindoline.

Particularly preferred secondary amines of the general formula (I) are tert-butyl amine; 2,2,6,6-tetramethylpiperidine; 4-hydroxy-2,2,6,6-tetramethylpiperidine; 2,2,6,6-tetramethyl-4-piperidinone; 2,2,6,6-tetramethyl-4-piperidinyl acetate; diethyl 1-(tert-butylamino)-2,2-dimethylpropyl phosphonate; dipropyl 1-(tert-butylamino)-2,2-dimethylpropyl phosphonate; dibutyl 1-(tert-butylamino)-2,2-dimethylpropyl phosphonate; 2,6-diethyl-2,3,6-trimethyl-4-piperidinone; 2,6-diethyl-2,3,6-trimethyl-4-piperidinol; 2,2,5,5-tetramethyl-1-pyrrolidine and 1,1,3,3-tetramethylisoindoline.

Polyfunctional amines can also be used as compounds of the formula (I). In the context of the present invention polyfunctional amines are compounds which have more than one secondary amino group. These properties are particularly recommendable when low viscosity of the polymer is required during processing.

Some examples of suitable polyfunctional amines are bis(2,2,6,6-tetramethyl-piperidine) sebacate; bis(2,2,6,6-tetramethylpiperidine) succinate; bis(2,2,6,6-tetra-methylpiperidine) adipate; bis(2,2,6,6-tetramethylpiperidine) phthalate; bis(2,2,6,6-tetramethylpiperidine) isophtalate; bis(2,2,6,6-tetramethylpiperidine) terephtalate; or polymeric multifunctional amines such as poly((6-((1,1,3,3-tetramethylbutyl)amino)-1,3,5-triazine-2,4-diyl)((2,2,6,6-tetramethyl-4-piperidinyl)imino)-1,6-hexanediyl-((2,2,6,6-tetramethyl-4-piperidinyl)imino)) (CHIMASSORB® 944, Ciba Specialty Chemicals, D-Lampertheim).

One method of carrying out the invention is that in the first step at least one secondary amine of the general formula (I), at least one oxidizing agent (A) and at least one vinyl monomer (M) are mixed together. The temperature of the reaction may range from about -20°C to about 150°C, preferably from about 0°C to about 100°C and more preferably from about 0°C to about 50°C. The reaction time may range from about 1 minute to about 72 h, preferably from about 5 minutes to about 24 h, and more preferably from about 15 minutes to about 12 h. The first step of the process of the present invention can be carried out in air or in an inert gas atmosphere such as nitrogen or argon. The secondary amine and oxidizing agent are introduced in a quantity ranging from about 30 wt.% to about 0,01 wt.%, preferably from about 10 wt.% to about 0,05 wt.% and more preferably from about 5 wt.% to about 0,06 wt.%, based on the weight of the monomer(s).

In the second step of the process, polymerization occurs by heating the mixture of the first step at a temperature ranging from about 0°C to about 220°C, preferably from about 50°C to about 180°C and most preferably from about 70°C to about 150°C. The second step of the process of the present invention is generally carried out in an inert gas atmosphere such as nitrogen or argon. The reaction time may range from about 10 minutes to about 72 h, preferably from about 30 minutes to about 32 h, and more preferably from about 1 h to about 24 h.

Another method of carrying out the invention is to heat a mixture of at least one secondary amine of the general formula (I), at least one oxidizing agent (A) and at least one vinyl monomer (M) in a single step. The temperature ranges from about 0°C to about 220°C, preferably from about 50°C to about 180°C and most preferably from about 70°C to about 150°C. Polymerization is generally carried out in an inert gas atmosphere such as nitrogen or argon. The reaction time ranges from about 10 minutes to about 72 h, preferably from about 30 minutes to about 32 h and more preferably from about 1h to about 24 h.

In the process according to the invention it is preferred to use as few solvents as possible. If organic solvents are required, suitable solvents or mixtures of solvents are typically pure alkanes, such as hexane, heptane or cycloalkane, hydrocarbons, such as toluene, ethylbenzene or xylene, halogenated hydrocarbons, such as chlorobenzene, esters, such as ethyl acetate, propyl, butyl or hexyl acetate, ethers, such as diethyl ether, dibutyl ether or ethylene glycol dimethyl ether, alcohols, such as methanol, ethanol, ethylene glycol, monomethyl ether, ketones, amides, sulfoxides or mixtures thereof. Water can also be used in the process according to the present invention.

The type of polymerization used can be bulk, solution, emulsion, dispersion or suspension polymerization and it can be carried out batchwise, semi-batchwise and continuously.

Optionally, some additives can be added to the polymerization medium before the polymerization or during the polymerization process in order to accelerate the polymerization. Such additives are well-known in the art and are for example camphorsulfonic acid, 2-fluoro-1-methylpyridinium p-toluenesulfonate, acylating compounds such as acetic anhydride (Tetrahedron 1997, 53(45), 15225), glucose, dextrose (Macromolecules 1998, 31, 7559), ascorbic acid (Macromolecules 2001, 34, 6531) or long-life radical initiators as reported in US-A 6,288,186 (column 4, lines 8-24).

The polymers prepared according to the present invention show a low polydispersity (M_{w}/Mₙ) which is usually lower than 2 and preferably below 1,5.

The (co)polymers of the present invention may have a number average molecular weight of from 500 to 2 ·10⁶, preferably from 2000 to 5 · 10⁵ and more preferably from 2000 to 2,5 ·10⁵.

The number average molecular weight of the polymer chains increases linearly with the monomer conversion, which allows a tailor-made polymer molecular weight to be obtained. Furthermore, the molecular weight of the polymers can be controlled by varying the amount of secondary amine(s) and/or oxidizing agent(s) in relation to the amount of monomers. High molecular weight polymers can be formed.

A further advantage of the present invention is that, after the removal of the non-polymerized monomers from the (co)polymers or after reaching a conversion rate of approximately 100%, a second polymerization step can be initiated simply by adding to the polymer synthesized in the first step a portion of fresh vinyl monomer or monomer mixture that can be different from the vinyl monomer or monomer mixture used in the first polymerization step. The polymerization of the vinyl monomer or monomer mixture added in the second step is then initiated by the polymer chains synthesized in the first polymerization step and di-block copolymers can for example be produced if the polymer chains synthesized in the first polymerization step consist of linear chains with one single growing chain end. The molecular weight and polydispersity of each block can be controlled independently during the respective polymerization step. This process can be repeated several times and can then provide multiblock copolymers of controlled molecular weight and molecular weight distribution for each block.

The resulting polymers are usually colorless and they can be used in most cases without any further purification for the production of coatings, elastomers, adhesives, plastics and compatibilizers in thermoplastic blends.

The following examples illustrate the invention in more detail.

### Examples

The molecular weight was determined by gel permeation chromatography (GPC) using a Shodex RI 74 differential refractometer. A flow rate of 1 ml/min was used and samples were prepared in THF. Polystyrene standards were used for calibration.

### Example 1

### Polymerization of styrene/acrylonitrile in the presence of 2,2,6,6-tetramethylpiperidine and peracetic acid, without any additional free-radical initiator.

To a 250 ml four-necked round bottomed flask fitted with a mechanical stirrer, a reflux condenser, a thermometer and a funnel is added 1.455 g peracetic acid (Aldrich, 35 wt.%; 0.67 10⁻² mol). Then, a mixture of 0.955 g 2,2,6,6-tetramethylpiperidine (Aldrich, 99%; 6.75 10⁻³ mol), 112.5 g styrene (1.08 mol) and 37.5 g acrylonitrile (0.707 mol) is rapidly added via the funnel. The mixture is stirred and degassed by bubbling through argon for 10 minutes. The reaction medium rapidly becomes pink due to the formation of 2,2,6,6-tetramethylpiperidine-1-oxyl (TEMPO). After 30 minutes at room temperature, the mixture is heated at reflux for 33 h. Samples are extracted from the reaction flask after 24 and 33 h and dried in vacuo at 70°C for 24 h. The monomer conversion is determined by gravimetric analysis and the molecular weight of the polymer is determined by GPC. Table 1 shows the results obtained by GPC.

**Table 1:**

| Results of GPC | | | | |
|---|---|---|---|---|
| **Time (h)** | **Conversion (%)** | **M**_{**n**} | **M**_{**w**} | **M**_{**w**}**/M**_{**n**} |
| 24 | 37.2 | 17940 | 25790 | 1.43 |
| 33 | 65.7 | 26660 | 37530 | 1.40 |

The increase in the molecular weight of the polymer with the monomer conversion and the narrow polydispersity are consistent with a controlled process.

### Comparative Example A

### Polymerization of styrene/acrylonitrile in the presence of 2, 2, 6, 6-tetramethylpiperidine and peracetic acid, in the presence of a free-radical initiator (benzoyl peroxide, BPO).

To a 250 ml four-necked round bottomed flask fitted with a mechanical stirrer, a reflux condenser, a thermometer and a funnel is added 1.455 g peracetic acid (Aldrich, 35 wt.%; 0.67 10⁻² mol). Then, a mixture of 0.955 g 2,2,6,6-tetramethylpiperidine (Aldrich, 99%; 6.75 10⁻³ mol), 1.376 g BPO (5.68 10⁻³ mol), 112.5 g styrene (1.08 mol) and 37.5 g acrylonitrile (0,707 mol) is rapidly added via the funnel. The mixture is stirred and degassed by bubbling through argon for 10 minutes. The reaction medium rapidly becomes pink due to the formation of 2,2,6,6-tetramethylpiperidine-1-oxyl (TEMPO). After 30 minutes at room temperature, the mixture is heated under reflux for 1 h. After cooling at room temperature, the polymer is dissolved with chloroform, transferred to an aluminium bag, dried overnight in air and then in vacuo at 70°C for 24 h. The monomer conversion is determined by gravimetric analysis and the molecular weight of the polymer is determined by GPC. Table 2 shows the results obtained by GPC.

**Table 2**

| Results of GPC | | | | |
|---|---|---|---|---|
| **Time (h)** | **Conversion (%)** | **M**_{**n**} | **M**_{**w**} | **M**_{**w**}**/M**_{**n**} |
| 1 | 77.1 | 32450 | 62150 | 1.91 |

In the presence of BPO, the polymerization takes place very rapidly (77 % monomer conversion after 1 h) and the polydispersity is very broad (M_{w}/Mₙ = 1,91), as expected for a conventional uncontrolled polymerization process. Moreover, the polymerization is exothermic and can be dangerous for large scale production.

### Example 2

### Polymerization of styrene in a one-pot process in the presence of 2,2,6,6-tetramethylpiperidine and m-chloroperbenzoic acid (mCPBA), without any additional initiator, according to the present invention

To a 250 ml four-necked round-bottomed flask fitted with a mechanical stirrer, a reflux condenser, a thermometer and a funnel is added 4.684 g mCPBA (Acros Organics, 70-75 wt.%; 1,9 · 10⁻² mol). Then, a mixture of 1.342 g 2,2,6,6-tetramethylpiperidine (Aldrich, 99%; 9,5 · 10⁻³ mol) and 93.6 g styrene (0.899 mol) are rapidly added via the funnel. The mixture is stirred and degassed by bubbling through argon for 10 minutes. The reaction is slightly exothermic (5-8°C) and becomes rapidly orange-pink due to the formation of 2,2,6,6-tetramethylpiperidine-1-oxyl (TEMPO). After 5 h at room temperature, the mixture is heated at 123°C for 44 h. Samples are extracted from the reaction flask after 10, 20 and 44 h, and dried in vacuo at 70°C for 24 h. The monomer conversion is determined by gravimetric analysis and the molecular weight of the polymer is determined by GPC. Table 4 shows the results obtained by GPC.

**Table 4**

| Results of GPC | | | | |
|---|---|---|---|---|
| **Time (h)** | **Conversion (%)** | **M**_{**n**} | **M**_{**w**} | **M**_{**w**}**/M**_{**n**} |
| 10 | 10.3 | 1770 | 2240 | 1.26 |
| 20 | 46.0 | 7680 | 9870 | 1.28 |
| 44 | 85.0 | 11060 | 16010 | 1.44 |

The increase in the molecular weight of the polymer with the monomer conversion and the narrow polydispersity are consistent with a controlled process.

### Comparative Example B

### Polymerization of styrene in the presence of 2, 2, 6, 6-tetramethylpiperidine and m-chloroperbenzoic acid (mCPBA):

### a) Polymerization of styrene in the presence of 2,2,6,6-tetramethylpiperidine, m-chloroperbenzoic acid (mCPBA) and benzoyl peroxide (BPO)

Example 1 of US-A 6,320,007 describes the polymerization of styrene in the presence of 2,2,6,6-tetramethylpiperidine, m-chloroperbenzoic acid (mCPBA) and benzoyl peroxide (BPO) in a three-step process:
- reaction of 2,2,6,6-tetramethylpiperidine with mCPBA for 5h, for the formation of the corresponding nitroxyl radical (TEMPO);
- a mixture of styrene, BPO and TEMPO (as prepared in the first step) is reacted at 95°C for 3.5 h. During this period of time, no polymer is formed;
- controlled polymerization occurs by increasing the polymerization temperature to 123°C.

Polymerization is controlled as shown by the linear evolution of the molecular weight with the monomer conversion and the narrow polydispersity.

### b) Polymerization of styrene in the presence of 2,2,6,6-tetramethylpiperidine, m- chloroperbenzoic acid (mCPBA) and benzoyl peroxide (BPO), in a one-pot process

To a 250 ml four-necked round-bottomed flask fitted with a mechanical stirrer, a reflux condenser, a thermometer and a funnel is added 4.684 g mCPBA (Acros Organics, 70-75 wt.%; 1.9 10⁻² mol). Then, a mixture of 1.342 g 2,2,6,6-tetramethylpiperidine (Aldrich, 99%; 9.5 10⁻³ mol), 1.925 g BPO (8·10⁻³ mol) and 93.6 g styrene (0.899 mol) are rapidly added via the funnel. The mixture is stirred and degassed by bubbling through argon for 10 minutes. The reaction is slightly exothermic (5-8°C) and the mixture becomes rapidly orange-pink due to the formation of 2,2,6,6-tetramethylpiperidine-1-oxyl (TEMPO). After 5 h at room temperature, the mixture is heated at 95°C for 3.5 h. After this period of time, a sample is extracted from the reaction flask for analysis (GPC and monomer conversion). The polymerization medium is then heated at 123°C and polymerization is terminated after 10 h. The polymer is dried in vacuo at 70°C for 24 h. The monomer conversion is determined by gravimetric analysis and the molecular weight of the polymer is determined by GPC. Table 3 shows the results obtained by GPC.

**Table 3**

| Results of GPC | | | | | |
|---|---|---|---|---|---|
| **Temperature (°C)** | **Time (h)** | **Conversion (%)** | **M**_{**n**} | **M**_{**w**} | **M**_{**w**}**/M**_{**n**} |
| 95 | 3.5 | 60.2 | 11920 | 41800 | 3.50 |
| 123 | 10 | 97.7 | 13010 | 21400 | 1.64 |

When Example 1 of US-A 6,320,007 is converted into a one-pot process (all the reagents being added at the beginning of the process), no evolution of the molecular weight with the monomer conversion and broad polydispersity are observed.

Additionally, uncontrolled polymerization already occurs when the reaction medium is heated to 95°C.

### Example 3

### Copolymerization of styrene with n-butyl acrylate in the presence of 2,2,6,6-tetramethyl-4-piperidone and peracetic acid

To a 500 ml four-necked round-bottomed flask fitted with a mechanical stirrer, a reflux condenser, a thermometer and a funnel is added 0.7275g peracetic acid (Aldrich, 35 wt.%; 3,35 · 10⁻³ mol). Then, a mixture of 0.5239 g 2,2,6,6-tetramethyl-4-piperidone (Aldrich, 95%; 3,37 · 10⁻³ mol), 75 g styrene (0.72 mol) and 75 g n-butyl acrylate (0.58 mol) are rapidly added via the funnel. The mixture is stirred at room temperature in a water bath and degassed by bubbling through argon for 10 minutes. After 30 minutes at room temperature, the mixture is heated at 110°C for 1 h, and then at 140°C. Samples are withdrawn from the polymerization medium after 4 and 6 h for analysis. After elimination of the residual monomer, the polymer is dried at 70°C in vacuo for 24 h.
After 2h: Mₙ = 29300; M_{w}/Mₙ = 1,80; yield = 18%
After 6h: Mₙ = 42000; M_{w}/Mₙ = 1,97; yield = 48%

The increase in the molecular weight of the polymer with the monomer conversion is indicative of a controlled process.

## Claims

1. Process for producing oligomers, cooligomers, polymers or block or random copolymers comprising
(I) mixing compounds consisting essentially of
a) at least one monoethylenically unsaturated monomer of the general formula (M),
HR¹C = CR²R³ (M)
wherein
R¹, R², R³ are independently selected from the group consisting of hydrogen, C₁-C₂₀-alkyl, C₁-C₂₀-cycloalkyl C₆-C₂₄- aryl, halogen, cyano, C₁-C₂₀-alkylester C₁C₂₀-cycloalkylester, C₁-C₂₀-alkylamide, C₁-C₂₀-cycloalkylamide C₆-C₂₄-arylester or C₆-C₂₄-arylamide,
b) at least one oxidizing agent (A) and
c) at least one secondary amine of the general formula (I) 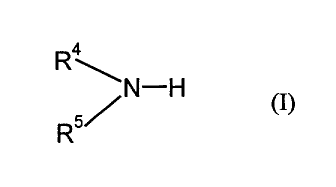
wherein
R⁴ and R⁵ are independently selected from the group consisting of C₁-C₁₈₋alkyl, C₂-C₁₈-alkenyl, C₂-C₁₈-alkynyl, C₃-C₁₂-cycloalkyl or C₃-C₁₂-heterocycloalkyl, C₆-C₂₄-aryl, which are unsubstituted or substituted by NO₂, halogen, amino, hydroxy, cyano, carboxy, ester, ketone, C₁-C₄-alkoxy, C₁-C₄-alkylthio, C₁-C₄-alkylamino;
R⁴ and R⁵ optionally form, together with the intermediate nitrogen atom, a C₃-C₁₂-cycloalkyl residue, a C₄-C₁₂-alkanol residue or a C₂-C₁₃-heterocycloalkyl residue containing oxygen, sulfur or nitrogen atoms;
R⁴ and R⁵ together form a residue of a polycyclic ring system or a polycyclic heterocycloaliphatic ring system containing oxygen, sulfur or nitrogen atoms;
wherein the carbon atom of the R⁴ and R⁵ residue directly adjacent to the alkoxyamine nitrogen atom is in each case substituted by 3 further organic substituents;
wherein optionally at least one of the residues R⁴ and R⁵ contain a functional group Y which is capable of further reacting or crosslinking with functional groups known in the coatings field and
(II) then heating the mixture at a temperature in the range from about 0°C to about 220°C.

2. Process according to Claim 1, wherein a solvent selected from the group consisting of water, alcohols, esters, ethers, ketones, amides, sulfoxides, hydrocarbons and halogenated hydrocarbons is used.

3. Process according to Claim 1, wherein monomers (M) are selected from the group consisting of styrene, substituted styrene, vinyl acetate, acrylonitrile, methyl acrylate, butyl acrylate, 2-ethylhexyl acrylate and maleic anhydride.

4. Process according to Claim 1, wherein the oxidizing agent (A) is selected from the group consisting of peracetic acid, perpropionic acid, hydrogen peroxide, hydrogen peroxide/titanium-containing catalysts, dibenzoyl peroxide, potassium peroxymonosulfate (2 KHSO₅•KHSO₄•K₂SO₄), silver oxide and lead (IV) oxide.

5. Process according to Claim 1, wherein the polymerization temperature in step (II) is between 50 and 180°C.

6. Process according to Claim 1, wherein the polymerization temperature in step (II) is between 70 and 150°C.

7. Process according to Claim 1, wherein the reaction temperature in step (I) is between 0 and 100°C.

8. Process according to Claim 1, wherein the reaction temperature in step (I) is between 0 and 50°C.
